# EUROPÄISCHE PATENTANMELDUNG

(11) **EP 2 612 558 A1**
(43) Veröffentlichungstag der Anmeldung: **10.07.2013**
(21) Anmeldenummer: 12150390.8
(22) Anmeldetag: 06.01.2012
(51) Int. Cl.: A23J 1/00, A23J 3/30

(54) **Verfahren zur Gewinnung von Fett, Proteinhydrolysat und Mineralstoffen aus tierischer Rohware mittels Thermolyse**

(71) Anmelder: Saria Bio-Industries AG & Co. KG, 59379 Selm (DE)
(72) Erfinder: Die Erfindernennung liegt noch nicht vor
(74) Vertreter: Gulde Hengelhaupt Ziebig & Schneider

(57) **Zusammenfassung**

Die vorliegende Erfindung betrifft ein einfaches hydrothermales Verfahren zur Behandlung von tierischem Material der Kategorien 1, 2 oder 3 gemäß EU-Verordnung (EG) Nr. 1069/2009 (nachfolgend "tierische Rohware" genannt), mit dem die drei Grundbestandteile der tierischen Rohware, nämlich Fett, Proteine (Peptide und Aminosäuren) und Mineralstoffe in hoher Reinheit und Ausbeute gewonnen werden, ohne dass eine vorherige Behandlung der Rohware, z. B. eine Abtrennung der Fettbestandteile, erforderlich ist.

## Beschreibung

Die vorliegende Erfindung betrifft ein einfaches hydrothermales Verfahren zur Behandlung von tierischem Material der Kategorien 1, 2 oder 3 gemäß EU-Verordnung (EG) Nr. 1069/2009 (nachfolgend "tierische Rohware" genannt), mit dem die drei Grundbestandteile der tierischen Rohware, nämlich Fett, Proteine (Peptide und Aminosäuren) und Mineralstoffe in hoher Reinheit und Ausbeute gewonnen werden, ohne dass eine vorherige Behandlung der Rohware, z. B. eine Abtrennung der Fettbestandteile, erforderlich ist.

Tierische Rohware im Sinne der Erfindung sind insbesondere Schlachtnebenprodukte aus Schlachtbetrieben, Küchen- und Speiseabfälle tierischen Ursprungs und für den menschlichen Verzehr nicht mehr geeignete Lebensmittel tierischen Ursprungs, ebenso die Körper verendeter, toter oder totgeborener Haustiere, Wildtiere oder Nutztiere oder Teile davon.

Die tierische Rohware ist, wie alle biologischen Materialien, u. a. dadurch gekennzeichnet, dass besonders ausgeprägte Wechselwirkungen zwischen ihren Grundbestandteilen, insbesondere zwischen Proteinen und Lipiden, bestehen. Als Bausteine der Zellmembranen sind sie eng miteinander verknüpft. Eine vergleichbar enge Bindung besteht auch zwischen den Proteinen (vor allem Muskelproteinen) und den vor allem im Knochenmaterial enthaltenen Erdalkalien (z. B. Calcium). Wegen dieser spezifischen Bindungen stellt bei der Gewinnung der Grundbestandteile der tierischen Rohware die Trennung von Proteinen und Fetten, aber auch von Proteinen und Mineralien eine besondere Herausforderung dar.

### Stand der Technik

Nach dem Stand der Technik werden aus fett- und proteinhaltiger Rohware mittels Trocken- oder Nassverfahren bislang ausschließlich Fett und verarbeitetes tierisches Protein (PAP) gewonnen.

Beim Trockenverfahren wird die Rohware zerkleinert, danach bei 133°C 20 min. drucksterilisiert und der sterilisierte Fleischbrei anschließend getrocknet. Die Trocknung der zerkleinerten Rohware kann aber auch als erster Prozessschritt erfolgen, und erst danach wird das bereits getrocknete Halbfabrikat sterilisiert. Anschließend wird der sterilisierte und getrocknete Fleischbrei entfettet, d. h. mittels Pressen bei Drücken bis 300 bar wird das Fett vom Protein getrennt. Das dabei anfallende Protein ist nur schwer wasserlöslich und enthält noch immer hohe Fettgehalte (12-15%).

Beim Nassverfahren wird die Rohware zunächst nur bis 90°C erwärmt und danach wird mittels Pressen die flüssige von der festen Phase getrennt. Die flüssige Phase wird in Eindampfanlagen aufkonzentriert. Das Konzentrat wird der festen Phase wieder zugemischt, und beide Stoffströme werden gemeinsam getrocknet. Die Protein-Fett-Trennung erfolgt ebenfalls mittels Pressen.

Der Nachteil beider Verfahren liegt vor allem darin, dass in der Proteinphase Fette verbleiben, die die Fettausbeute verringern und auch das Protein in dessen Reinheit und Ausbeute beeinträchtigen. Hinzu kommt, dass die Verdaulichkeit der so hergestellten Proteine eingeschränkt ist und sie wegen ihrer Proteinstruktur überwiegend wasserunlöslich sind. Außerdem bleibt ein großer Proteinanteil in der Knochenmatrix gebunden, was die verfügbare Proteinausbeute unter 50% senkt. Insoweit sind die derzeit angewandten Verfahren nicht dazu geeignet, die in tierischer Rohware enthaltenen Grundbausteine Fett, Protein und Mineralien so zu separieren, dass qualitativ hochwertige und reine Finalprodukte gewonnen werden können. Heute produzierte Proteinmehle enthalten daher bei einem Ascheanteil von 25-35% häufig weniger als 50% Protein, aber noch einen Restfettgehalt von 12-15%.

Auch die Patentliteratur gibt keine Auskunft über Möglichkeiten der gleichzeitigen Gewinnung reiner Protein-, Fett- und Mineralstoff-Fraktionen aus tierischer Rohware.

So beschreibt RU 2132142 C1 ein Herstellungsverfahren zur Gewinnung von Proteinhydrolysaten aus Schlachtnebenprodukten wie Fleisch und Knochen. Dabei wird mittels enzymatischer Thermolyse das zerkleinerte Rohmaterial bei 40 bis 50°C und über eine Zeit von 20 - 34h gespalten und auf diesem Wege die Proteinhydrolysate hergestellt.

Ein Verfahren zur Herstellung von Proteinhydrolysaten auf der Basis von Schlachtnebenprodukten wird auch in RU 2160 538 C1 beschrieben. Nach einer Sterilisation bei 120 bis 140°C und einem Druck von 2 - 4 bar wird anschließend eine enzymatische Thermolyse bei einer Temperatur von 40 bis 50°C durchgeführt. Im Anschluss an eine Erhitzung auf 110 bis 120 °C, Abkühlung und Filtration werden die Proteinhydrolysate getrocknet.

Diese beiden Verfahren sind insbesondere nicht geeignet, neben den Proteinhydrolysaten reine Fraktionen von Fett und /oder Mineralien zu gewinnen.

Gemäß EP 1 193 223 A1 werden biogene Restmassen der Kategorie 1 bei 150 bis 250°C und 10 - 50 bar hydrolysiert, die Hydrolyselösung wird abgekühlt und entspannt und dann mittels anaerober Bakterien zu Methan umgesetzt. Das Verfahren ist nicht auf die Gewinnung der in den Schlachtnebenprodukten enthaltenen Fette, Proteine und Mineralstoffe gerichtet, sondern die Thermolyse wird als Vorbehandlung eingesetzt, um so günstigere Bedingungen für die nachfolgende Methan-Fermentation zu haben.

In der Patentschrift WO 2006/069803 A1 wird ein Verfahren zur Herstellung eines definierten Peptid-/Aminosäuregemisches aus proteinhaltigen pflanzlichen und tierischen Rohstoffen, insbesondere Tiermehl und Weizenschrot, beschrieben, wonach durch eine gesteuerte Druck-/Temperatureinwirkung und die Reaktionszeit Proteine mit definierten Molekulargewichten in der Größenordnung von 10-50 kDa gewonnen werden können. Der Temperaturbereich für die Spaltung liegt dabei zwischen 140°C und 250°C und der Druck zwischen dem 1,1- und dem 10- fachen des Dampfdruckes der jeweiligen Temperatur.

Auch dieses Verfahren gibt keinen Hinweis auf die gleichzeitige und einfache Gewinnung reiner Fett- und Proteinfraktionen aus nicht vorbehandelter tierischer Rohware.

Es war deshalb die Aufgabe der vorliegenden Erfindung, ein Verfahren zur Behandlung von tierischer Rohware zur Verfügung zu stellen, mit dem die darin enthaltenen Grundbestandteile Fett, Protein und Mineralstoffe in einfacher Weise voneinander separiert werden können, ohne die Fette vor dem Verfahren selbst abtrennen zu müssen oder die Rohware vorher in anderer Weise zu behandeln, als sie zu zerkleinern. Insbesondere soll jeder der Bestandteile für sich in hoher Reinheit und mit maximaler Ausbeute gewonnen werden.

Die Aufgabe der Erfindung wird mit den Merkmalen des Verfahrens des Anspruchs 1 gelöst. Die Unteransprüche stellen bevorzugte Ausführungsformen des erfindungsgemäßen Verfahrens dar.

Das erfindungsgemäße Verfahren zur Gewinnung von Fett, Proteinhydrolysat und Mineralstoffen aus tierischer Rohware ist dadurch gekennzeichnet, dass die komplexe stoffliche Primärstruktur der Rohware in einem Autoklaven durch Thermolyse der Proteine aufgehoben und dadurch das ursprünglich komplexe Drei-Phasen-System des Ausgangsmaterials (Proteine, Lipide und Mineralien) aufteilbar wird in wasserlösliche Peptide und Aminosäuren sowie in Fett und in Mineralik.

Die gewählten erfindungsgemäßen Prozessbedingungen der Thermolyse bewirken die Spaltung der Proteine in wasserlösliche Aminosäuren und Peptide (Proteinhydroylsate), wobei sich neben einer Wasserphase, in welcher die Proteinhydrolysate gelöst sind, eine Fettphase sowie eine mineralische Phase (Sediment), die mit den anorganischen Verbindungen aus der Rohware angereichert ist, bilden. Nach der Thermolyse wird der Autoklav entspannt und vorzugsweise mit dem verbliebenen Restdruck entleert. Nach Abkühlung der Suspension auf 80-100°C, vorzugsweise 90-100°C, kann das Drei-Phasen-System mit üblichen Verfahren getrennt werden. Dabei hat sich überraschenderweise gezeigt, dass das Drei-Phasen-System saubere Phasengrenzflächen aufweist und keinerlei Zwischenphasen besitzt. Infolgedessen ist es möglich, die drei Phasen sehr gut voneinander zu trennen und deren Bestandteile in hoher Reinheit und maximaler Ausbeute zu erhalten.

In einer Ausgestaltung der Erfindung kann als Einsatzmaterial neben der Rohware auch verarbeitetes tierisches Protein (Processed Animal Protein, PAP) eingesetzt werden. Unter "verarbeitetem tierischen Protein" wird tierisches Material verstanden, das gemäß den Vorschriften der V01069/2009 der EU nach dem Stand der Technik sterilisiert worden ist und zumeist in getrockneter Form vorliegt. Verarbeitetes tierisches Protein kann insbesondere dann zusammen mit der Rohware eingesetzt werden, wenn die Einstellung bestimmter Aminosäurespektren beabsichtigt ist. Diese können natürlich auch durch die Auswahl und Zusammensetzung der Rohware selbst eingestellt werden, wofür zum Beispiel Blut, Federn und andere proteinogene Substanzen allein oder in bestimmten Mischungsverhältnissen zueinander verwendet werden.

Die eingesetzte Rohware wird vor der Thermolyse in der Regel zerkleinert, es sei denn, das aufzuschließende Rohmaterial liegt bereits in einer geeigneten Größe von z. B. bis zu 20mm vor.

Erfindungsgemäß bevorzugt wird der Trockensubstanzgehalt des zu hydrolysierenden Gemisches durch Zugabe der entsprechenden Menge Wasser auf 15 bis 45 Gew%, bezogen auf das Gesamtgewicht des zu hydrolysierenden Gemisches, eingestellt, vorzugsweise auf 25-35 Gew%, besonders bevorzugt auf ca. 35 Gew%. Die Thermolyse wird vorzugsweise in einem Temperaturbereich von 140°C bis 200°C, ganz besonders bevorzugt von 160 bis 180 °C durchgeführt. Die Prozessdauer beträgt von 0,5 bis 2h, vorzugsweise ca. eine Stunde.

Das unter diesen Reaktionsbedingungen entstandene Drei-Phasen-System aus Fettphase, Proteinhydrolysat-Phase und mineralischer Phase (Sediment) weist überraschend scharfe Phasengrenzflächen auf, wodurch eine einfache und effiziente Trennung möglich ist. Die Auftrennung des Drei-Phasen-Systems kann nach den im Stand der Technik bekannten Methoden erfolgen. So ist es beispielsweise möglich, das Drei-Phasen-System durch Trikantieren in Fettphase, Proteinhydrolysat-Phase und mineralische Phase (Sediment- bzw. Feststoffphase) aufzutrennen.

In einer anderen Ausführungsform kann zunächst das Sediment von der aus Fett-und Proteinhydrolysat-Phase bestehenden Flüssigphase abgetrennt werden. Die Abtrennung der mineralischen Phase von der Flüssigphase kann beispielsweise durch Zentrifugieren oder Dekantieren erfolgen, vorzugsweise durch Dekantieren. Überraschend hat sich gezeigt, dass bereits beim Dekantieren eine sehr hohe Reinheit der beiden Phasen erreicht wird. Die abgetrennte mineralische Phase enthält danach nur noch einen organischen Rest zwischen 25 bis 30 Gew%, bezogen auf die Trockensubstanz der mineralischen Phase. Die Auftrennung der Flüssigphase in Fettphase und wässrige Proteinhydrolysat-Phase erfolgt ebenfalls mit den dem Fachmann bekannten Trennungsmethoden, hier vorzugsweise mit einem Separator. Die erhaltene Proteinhydrolysat-Phase ist fettfrei und der gelöste mineralische Anteil ist kleiner 5 Gew%. Die Moleküle der Proteinhydrolysat-Phase sind gut wasserlöslich, weil die Molekulargewichte der enthaltenen Peptide und Aminosäuren bei 1-50 kDa liegen. Soll sichergestellt werden, dass in der Proteinhydrolysat-Phase keine Moleküle mit dem Molekulargewicht von Prionen enthalten sind, so kann die Proteinhydrolysat-Phase einer Ultrafiltration unterzogen werden, mit der Aminosäuren und Peptide >20 kDa, vorzugsweise >10 kDa abgetrennt werden. Bekannt ist, dass das Molekulargewicht von Prionen 27 bis 30 kDa beträgt.

Die abgetrennte Fraktion mit Molekulargewichten >20 kDa bzw. >10 kDa kann einer erneuten erfindungsgemäßen Thermolyse zugeführt und nachgespalten werden. Damit ist sichergestellt, dass ausschließlich Proteinhydrolysate mit einem Molekulargewicht von <20 kDa oder von <10 kDa gewonnen werden, was bedeutet, dass darin die ursprüngliche tierspezifische Proteinstruktur nicht mehr existent ist und somit jegliches Risiko auch beim Einsatz dieser Produkte als Futtermittel, beispielsweise in der Aquakultur, durch evtl. in der Rohware enthaltenes Wiederkäuermaterial verfahrensimmanent ausgeschlossen ist.

Soll das Proteinhydrolysat in fester Form erhalten werden, wird die - gegebenenfalls ultrafiltrierte - wässrige Aminosäure-Peptid-Lösung zunächst aufkonzentriert. Die Wassergehalte werden dabei so reduziert, dass ein Trockensubstanzgehalt von 30-70% erreicht wird. Das so erhaltene Konzentrat ist lagerstabil. Die Aufkonzentrierung erfolgt vorzugsweise in einer Eindampfanlage, die ein- oder mehrstufig sein kann.

Für die Herstellung von qualitativ besonders hochwertigen pulverförmigen Aminosäure-Peptid-Produkten kann das Konzentrat auch bis auf einen Restwassergehalt von 2 bis 8 Gew% mit üblichen Methoden getrocknet werden. Vorzugsweise werden hierfür Sprühtrockner, ggf. auch Walzentrockner, eingesetzt.

Es ist auch möglich, das erfindungsgemäß erhaltene, konzentrierte Proteinhydrolysat mit konventionell hergestelltem verarbeiteten tierischen Protein (PAP) zu mischen und anschließend zu trocknen, um die Gehalte an Peptiden und Aminosäuren in den konventionell hergestellten Materialien zu erhöhen.

Die mit dem erfindungsgemäßen Verfahren erhaltene mineralische Feststoffphase (Sediment) enthält überwiegend Calcium und Phosphate. Sie ist insbesondere mit Phosphor - bis zu 39 Gew% P₂O₅ hoch angereichert und weist typischerweise nur noch vergleichweise geringe organische Reste von 25 bis 30 Gew% auf. Das Sediment kann getrocknet und vermahlen oder im feuchten Zustand einer Biogasanlage zugeführt oder in einem speziellen flammlosen Brenner unter Zusatz von heterogenen Katalysatoren zu unmittelbar pflanzenverfügbarer Di-Calciumphosphat-Asche verbrannt werden.

Zusammenfassend kann festgestellt werden, dass mit dem erfindungsgemäßen Aufschlussverfahren Fettausbeuten von 88-93 Gew% erzielt werden, d.h. 88-93 Gew% des Fettanteils in der Rohware können mit einer Reinheit von ca. 98 Gew.% gewonnen werden. Gleichzeitig wird mit dem erfindungsgemäßen Verfahren ein fettfreies Proteinhydrolysat gewonnen, das weniger als 5 Gew% an gelösten Mineralien beinhaltet.

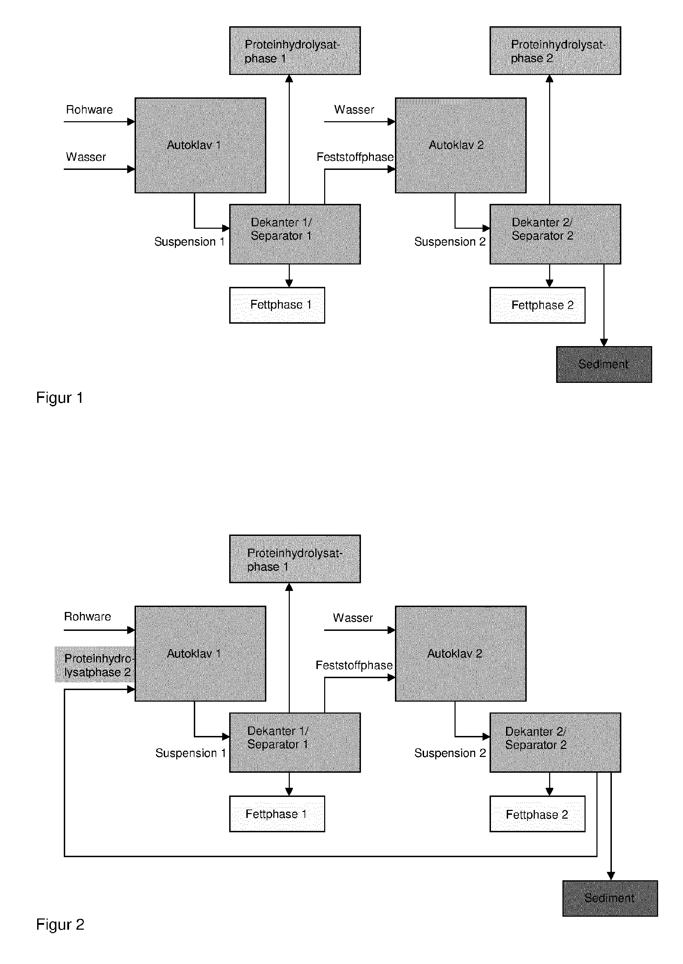

In einer Ausgestaltung der Erfindung kann die bei der erfindungsgemäßen Thermolyse erhaltene Feststoffphase einer erneuten erfindungsgemäßen Thermolyse unterzogen werden. Damit werden die Ausbeuten an Peptid-Aminosäure-Gemisch und Fett weiter erhöht und zugleich die Organik in der mineralischen Phase weiter erheblich verringert, so dass bereits diese mineralische Phase als organikfreies TriCalciumphosphat vermarktet werden kann. In **Figur 1** ist das Schema einer solchen Verfahrensweise dargestellt.

Die Nachbehandlung der mineralischen Phase kann auch enzymatisch erfolgen.

In einer weiteren Ausgestaltung der Erfindung kann die Thermolyse quasi-kontinuierlich in einer Kaskade von mehreren Batch-Apparaturen **(****Figur 2****)** oder in einem Rohrreaktor durchgeführt werden.

Das quasi-kontinuierliche Verfahren ist dadurch gekennzeichnet, dass das Sediment der ersten Thermolyse mit Wasser versetzt und in einem verbundenen zweiten Autoklaven erneut erfindungsgemäß hydrolysiert wird und die abgetrennte wässrige Proteinhydrolysat-Phase aus dieser zweiten Thermolyse der zu hydrolysierenden Rohware im ersten Autoklaven zugesetzt wird.

Nachfolgend wird die Erfindung an Ausführungsbeispielen näher erläutert, ohne sie darauf einzuschränken.

### Ausführungsbeispiele

### Beispiel 1: Einstufige Thermolyse von K3-Fleischknochen zur Herstellung von Proteinkonzentrat, Fett und aschereichem Sediment

Für die Thermolyse wurde eine Mischung aus Fleischknochen Kategorie 3 aus der Rinder- und der Schweineschlachtung mit folgender Zusammensetzung verwendet:

| **Bestandteile Fleischknochenmehl** | **Anteil [%]** | **Anteil Versuch [kg]** |
|---|---|---|
| Protein | 16,9 | 676 |
| Fett | 19,0 | 760 |
| Anorganische Verbindungen | 10,6 | 424 |
| Wasser | 53,5 | 2.140 |
| **Gesamt** | | **4.000** |

Dieses Gemisch wurde für die Thermolyse mit Wasser versetzt. Die Einwaage für den Autoklaven hatte folgende Zusammensetzung:

| | |
|---|---|
| Wasser | 2.200 kg |
| Fleischknochenmaterial | 4.000 kg |

In dem Autoklaven wurden die Komponenten mit einem mechanischen Rührer gemischt und das Stoffgemisch dabei auf eine Zieltemperatur von 160°C aufgeheizt. Diese Temperatur wurde für 2h gehalten und nachfolgend der Autoklav auf 100 °C abgekühlt. Mit einem Dekanter wurden die gelösten und ungelösten Bestandteile des Stoffgemisches voneinander getrennt.

Nachfolgend wurde mittels eines Separators die wässrige Proteinphase von der flüssigen Fettphase getrennt. Bezogen auf Trockensubstanz wurden folgende Anteile gewonnen:

| **Bestandteil** | **Produkt TS [kg]** | **Anteil Bestandteil [%]** | **Menge Bestandteil [kg]** | ***Ausbeute [%]*** |
|---|---|---|---|---|
| Protein | 480,2 | 94,0 | 451,4 | *66,8* |
| Fett | 682 | 99,0 | 675,2 | *88,8* |
| Asche (ungelöster Rest) | 742,0 | 53,9 | 399,9 | *94,3* |

Das Proteinhydrolysat wurde durch Eindampfung auf 50% Trockensubstanz (TS) aufkonzentriert.

### Beispiel 2: Großtechnischer Versuch einer einstufigen Thermolyse von K3-Rohware zur Herstellung von Proteinhydrolysat-Konzentrat, Fett und aschereichem Sediment.

Der großtechnische Versuch wurde mit einer Menge von 4.000kg Rohware aus der Rinder- und Schweineschlachtung mit folgender Rohwarenzusammensetzung durchgeführt:

| | | |
|---|---|---|
| Wasser: | | 50,6% |
| Trockensubstanz: | | 49,4% |
| davon: | Mineralien | 10,3% |
| | Protein | 18,8% |
| | Fett | 20,3% |

Dieser Rohware wurden 1.640kg Wasser zugemischt und so eine Maische mit einem Trockensubstanzanteil von 35% hergestellt. Danach erfolgte die Thermolyse bei einer Temperatur von 160 °C über eine Zeit von 2h.

Nach der Entspannung des Autoklaven wurde das Sediment mittels eines Dekanters abgetrennt. Für die nachfolgende Trennung von flüssiger Fettphase und Proteinhydrolysatlösung wurde ein Separator eingesetzt. Das Proteinhydrolysat wurde auf einen TS-Gehalt von 50% aufkonzentriert.

### Ausbeuteermittlung

Zur Ermittlung der Ausbeuten wurden die einzelnen Mengenströme Fett, Protein/Proteinhydrolysat und Mineralien vor und nach der Thermolyse für eine normierte Menge von 1.000kg Rohware getrennt erfasst und ihre Anteile ermittelt. Auf der Basis dieser Daten wurde eine Mengenbilanz erstellt. Zum Vergleich wurde das Ergebnis den nach dem konventionellen Trockenverfahren für 1.000kg Rohware produzierten Produktmengen gegenübergestellt.

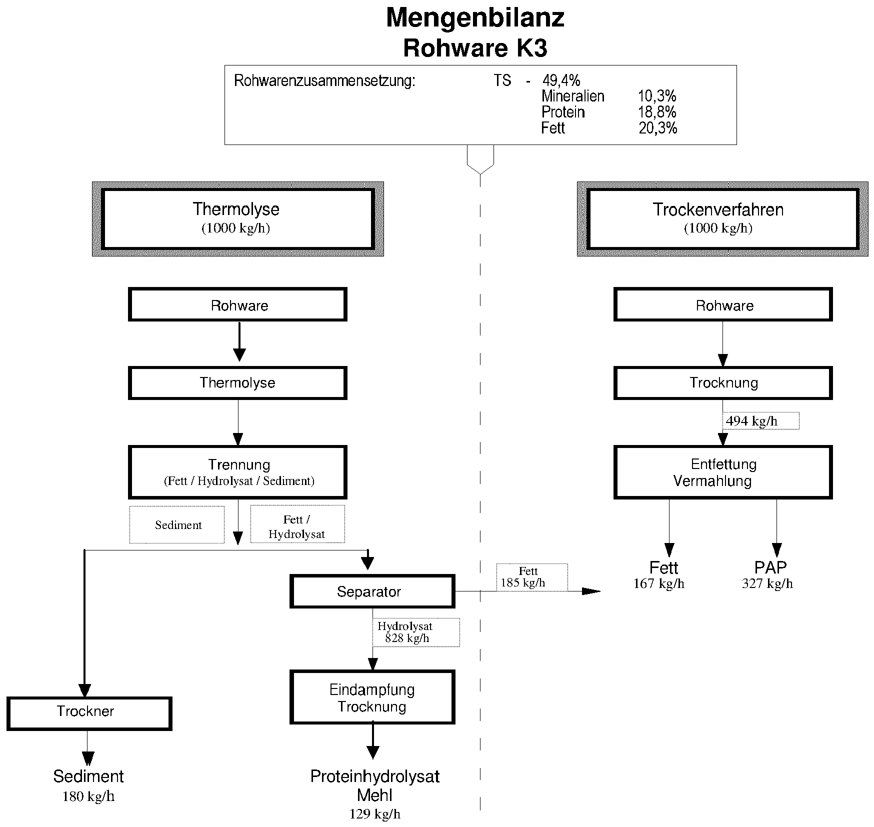

Bezogen auf die in der Rohware enthaltene Fettmenge von 20,3% (203 kg) wird bei dem Trockenverfahren eine Fettausbeute von 82% (167kg) erreicht, während bei Anwendung des erfindungsgemäßen Verfahrens die Fettausbeute 91% (185kg) beträgt.

## Patentansprüche

1. Verfahren zur Gewinnung von Fett, Proteinhydrolysat und Mineralstoffen aus tierischer Rohware durch Thermolyse,
**dadurch gekennzeichnet, dass**
a) die Rohware gegebenenfalls zerkleinert und mit Wasser versetzt wird,
b) das Gemisch im Autoklaven unter Rühren auf 140-200°C erhitzt und für 0,5 - 2 Stunden bei dieser Temperatur und unter dem Dampfdruck der jeweiligen Temperatur hydrolysiert wird,
c) das resultierende Drei-Phasen-System, bestehend aus flüssiger Fettphase, wässriger Proteinhydrolysat-Phase und Sediment, in die Phasen aufgetrennt wird, wobei die wässrige Proteinhydrolysat-Phase wasserlösliche Aminosäuren und Peptide und das Sediment die ungelösten Mineralstoffe beinhaltet,
d) die wässrige Proteinhydrolysat-Phase gegebenenfalls einer Ultrafiltration unterworfen wird, um Aminosäuren und Peptide mit Molekulargewichten > 20 kDa abzutrennen, und
e) die wässrige Proteinhydrolysat-Phase gegebenenfalls aufkonzentriert und/oder getrocknet wird.

2. Verfahren nach Anspruch 1,
**dadurch gekennzeichnet, dass**
im Schritt a) neben der tierischen Rohware verarbeitetes tierisches Protein (PAP processed animal protein) eingesetzt wird.

3. Verfahren nach Anspruch 1 oder 2,
**dadurch gekennzeichnet, dass**
im Schritt a) das zu hydrolysierende Gemisch auf einen Trockensubstanzgehalt von 15- 45 Gew% eingestellt wird, bezogen auf das Gesamtgewicht des zu hydrolysierenden Gemisches, vorzugsweise auf 25-35 Gew%, besonders bevorzugt auf ca. 35 Gew.%.

4. Verfahren nach einem der Ansprüche 1 bis 3,
**dadurch gekennzeichnet, dass**
die Thermolyse im Schritt b) bei 160-180°C durchgeführt wird.

5. Verfahren nach einem der Ansprüche 1 bis 4,
**dadurch gekennzeichnet, dass**
die Thermolyse im Schritt b) für 1 bis 2 Stunden, vorzugsweise für ca. 1 Stunde, durchgeführt wird.

6. Verfahren nach einem der Ansprüche 1 bis 5,
**dadurch gekennzeichnet, dass**
im Schritt c) aus dem Drei-Phasen-System zunächst das Sediment durch Dekantieren oder Zentrifugieren abgetrennt wird und danach Fettphase und wässrige Proteinhydrolysat-Phase voneinander getrennt werden.

7. Verfahren nach einem der Ansprüche 1 bis 6,
**dadurch gekennzeichnet, dass**
im Schritt c) die Auftrennung des Drei-Phasen-Systems durch Trikantieren vorgenommen wird.

8. Verfahren nach einem der Ansprüche 1 bis 7,
**dadurch gekennzeichnet, dass**
im Schritt e) die Aufkonzentrierung der wässrigen Proteinhydrolysat-Phase in einer Eindampfanlage vorgenommen wird, die ein- oder mehrstufig ist.

9. Verfahren nach einem der Ansprüche 1 bis 8,
**dadurch gekennzeichnet, dass**
das aufkonzentrierte Proteinhydrolysat aus Schritt e) bis auf einen Restwassergehalt von 2 bis 8 Gew%, bezogen auf das getrocknete Proteinhydrolysat, vorzugsweise mittels Sprühtrocknung getrocknet wird,.

10. Verfahren nach einem der Ansprüche 1 bis 7,
**dadurch gekennzeichnet, dass**
die nach der Ultrafiltration der wässrigen Proteinhydrolysat-Phase im Schritt e) erhaltene wässrige Phase, umfassend die Aminosäuren und Peptide >10kDa, einer erneuten Thermolyse gemäß den Schritten a) bis e) zugeführt wird.

11. Verfahren nach einem der Ansprüche 1 bis 7,
**dadurch gekennzeichnet, dass**
Sediment oder abgetrennte wässrige Proteinhydrolysat-Phase aus Schritt d) einer erneuten Thermolyse gemäß den Schritten a) bis e) unterzogen werden.

12. Verfahren nach einem der Ansprüche 1 bis 7,
**dadurch gekennzeichnet, dass**
das Verfahren quasi-kontinuierlich geführt wird, indem das aus Schritt d) einer ersten Thermolyse resultierende Sediment mit Wasser versetzt und in einem verbundenen zweiten Autoklaven erneut gemäß den Schritten a) bis d) hydrolysiert wird, wobei die abgetrennte wässrige Proteinhydrolysat-Phase aus Schritt d) dieser zweiten Thermolyse dem im ersten Autoklaven zu hydrolysierenden Gemisch gemäß Schritt a) zugesetzt wird.
